# EUROPÄISCHE PATENTSCHRIFT

(11) **EP 2 737 293 B1**
(45) Veröffentlichungstag und Bekanntmachung des Hinweises auf die Patenterteilung: **27.03.2019**
(21) Anmeldenummer: 12729926.1
(22) Anmeldetag: 12.06.2012
(51) Int. Cl.: G01M 17/007

(54) **VORRICHTUNG UND VERFAHREN ZUM PRÜFEN EINES FAHRZEUGS**
DEVICE AND METHOD FOR TESTING A VEHICLE
DISPOSITIF ET PROCÉDÉ POUR LE CONTRÔLE D'UN VÉHICULE

(30) Priorität: 28.07.2011 DE 102011079987
(43) Veröffentlichungstag der Anmeldung: 04.06.2014
(73) Patentinhaber: Robert Bosch GmbH, 70442 Stuttgart (DE)
(72) Erfinder: WENDT, Axel, 70599 Stuttgart (DE)
(74) Vertreter: Schmitt-Nilson Schraud Waibel Wohlfrom Patentanwälte Partnerschaft mbB
(86) Internationale Anmeldenummer: PCT/EP2012/061120
(87) Internationale Veröffentlichungsnummer: WO 2013/013877

(56) Entgegenhaltungen:
- EP-A2- 2 538 210
- DE-A1-102008 034 585
- JP-A- 2006 201 124
- US-A- 5 300 925
- US-A1- 2002 059 832
- US-A1- 2006 137 439
- US-A1- 2010 161 255

## Beschreibung

Die Erfindung betrifft eine Vorrichtung und ein Verfahren zum Prüfen eines Fahrzeugs, insbesondere eines Kraftfahrzeugs, mit Hilfe von Schall- und Videosensoren.

### Stand der Technik

Konzepte zur automatisierten optischen Inspektion von Kraftfahrzeugen mit Hilfe von Videokameras sind im Stand der Technik bekannt. Andere Konzepte der Stand der Technik werden in US2002059832, US5300925, US2006137439, JP200620112, DE102008034585, US20100161255 und EP2538210 offenbart.

### Aufgabe der Erfindung

Es ist eine Aufgabe der Erfindung, eine verbesserte Vorrichtung und ein verbessertes Verfahren zur automatisierten Prüfung von Fahrzeugen, insbesondere Kraftfahrzeugen, zur Verfügung zu stellen.

Diese Aufgabe wird durch ein erfindungsgemäßes Verfahren nach dem Patentanspruch 1 und eine erfindungsgemäße Vorrichtung nach dem unabhängigen Patentanspruch 5 gelöst. Die abhängigen Ansprüche beschreiben vorteilhafte Ausgestaltungen des erfindungsgemäßen Verfahrens und der erfindungsgemäßen Vorrichtung.

Ein erfindungsgemäßes Verfahren zum Prüfen eines Fahrzeugs schließt ein, mit dem Fahrzeug eine Messvorrichtung zu überfahren und dabei den während der Überfahrt von dem Fahrzeug abgegebenen Schall mit einer Schallaufnahmevorrichtung (Mikrofon) aufzunehmen und den aufgenommenen Schall zur Fahrzeug-Diagnose auszuwerten.

Eine erfindungsgemäße Vorrichtung zum Prüfen eines Fahrzeugs weist wenigstens eine Schallaufnahmevorrichtung und eine Auswertvorrichtung auf. Die Schallaufnahmevorrichtung ist zur Aufnahme von Schall ausgebildet, der von einem zu prüfenden Fahrzeug erzeugt und abgegeben wird. Die Auswertvorrichtung ist ausgebildet, um den von der wenigstens einen Schallaufnahmevorrichtung aufgenommenen Schall zur Fahrzeug-Diagnose auszuwerten.

Ein erfindungsgemäßes Verfahren und eine erfindungsgemäße Vorrichtung ermöglichen eine verbesserte Fahrzeug-Diagnose, indem sie den von dem zu untersuchenden Fahrzeug abgegebenen Schall auswerten und Unregelmäßigkeiten in diesem Schall, die auf einen Fehler des Fahrzeugs hindeuten, identifizieren.

Die automatisierte Aufnahme und Auswertung von Schall, der beim Betrieb des Kraftfahrzeugs vom Motor, der Auspuffanlage und/oder den Gelenken abgegeben wird, ist derzeit nicht bekannt.

Eine erfindungsgemäße Kfz-Diagnose kann zuverlässig und automatisiert durchgeführt werden. Das Ergebnis ist insbesondere nicht von den Fähigkeiten und der Erfahrung eines die Diagnose durchführenden Kfz-Mechanikers abhängig, der die Auswertung der von dem Fahrzeug abgegebenen Geräusche "nach Gehör" durchführt.

In einer Ausführungsform umfasst ein erfindungsgemäßes Verfahren, den aufgenommenen Schall mit einem vorgegebenen Soll-Schall zu vergleichen und Abweichungen des aufgenommenen Schalls vom vorgegebenen Soll-Schall zu identifizieren. Ein ideales, einwandfrei funktionierendes Fahrzeug erzeugt Soll-Schall, der insbesondere die Geräusche des laufenden Verbrennungsmotors inklusive des Abgasstrangs, durch mögliche Vibrationen von Bauteilen am Fahrzeug hervorgerufene Geräusche und das Geräusch der Abrollbewegung der Reifen enthält.

Defekte am Verbrennungsmotor oder der Abgasanlage, lose oder lockere Bauteile und/oder defekte Reifen bewirken zusätzliche oder abweichende Geräusche im Ist-Schall, so dass dieser von dem einem Soll-Schall, der von einem idealen Fahrzeug, das keine Defekte aufweist, abgegeben wird, abweicht. Somit lassen sich durch Bestimmen der Differenz zwischen dem aufgenommenen Ist-Schall und dem vorgegebenen, idealen Soll-Schall Defekte am Fahrzeug erkennen.

In einer Ausführungsform schließt das Auswerten des aufgenommenen Schalls ein, Auffälligkeiten im aufgenommenen Schall zu identifizieren. Dies ermöglicht eine automatisierte Fahrzeug-Diagnose auch dann, wenn der Soll-Schall eines idealen Fahrzeugs nicht bekannt sind. Die Identifikation von Auffälligkeiten kann beispielsweise mit Hilfe so genannter statistischer Lernverfahren erfolgen.

In einer Ausführungsform schließt das Verfahren ein, wenigstens ein optisches Bild des Fahrzeugs aufzunehmen und wenigstens eine lokalisierte Schallquelle in wenigstens einem aufgenommenen Bild optisch darzustellen. Dadurch können Schallquellen, die möglicherweise durch Defekte hervorgerufen werden, besonders gut und bequem lokalisiert werden. Durch die Kombination der akustischen Auswertung mit optischen Bildern des Fahrzeugs kann die Auswertung und Fehlerdiagnose noch weiter verbessert und vereinfacht werden, da in dem kombinierten Bild unmittelbar zu erkennen ist, an welcher Stelle des Fahrzeugs die Fehlersuche fortzusetzen ist.

In einer Ausführungsform schließt das Verfahren ein, wenigstens eine Schallquelle am Fahrzeug zu lokalisieren. Durch Lokalisieren der Quelle(n) von Geräuschen, die im aufgenommenen Schall enthalten sind, z. B. mit Hilfe von Richtmikrofonen, kann die Qualität der Diagnose verbessert werden, da sich die Geräuschquellen und damit Defekte, die ungewöhnliche Geräusche erzeugen, räumlich lokalisieren lassen. Die weitere Fehlersuche kann dann auf den identifizierten lokalisierten und räumlich begrenzten Bereich konzentriert werden.

In einer Ausführungsform weißt eine erfindungsgemäße Vorrichtung wenigstens zwei Schallaufnahmevorrichtungen (Mikrofone) auf. Durch eine Mehrzahl von Schallaufnahmevorrichtungen lassen sich die Schallquellen am Fahrzeug besonders gut und effektiv lokalisieren.

In einer Ausführungsform sind die Schallaufnahmevorrichtungen so ausgebildet, dass sie ein gutes Lokalisieren der Quellen des aufgenommenen Schalls ermöglichen. Die Schallaufnahmevorrichtungen können insbesondere als Richtmikrofone ausgebildet sein. Durch genaues Lokalisieren der Schallquellen können die Ursachen möglicher Defekte besonders gut eingegrenzt werden, und die Fehlersuche wird vereinfacht und beschleunigt.

In einer Ausführungsform umfasst eine erfindungsgemäße Vorrichtung wenigstens eine Bildaufnahmevorrichtung, die zur Aufnahme wenigstens eines Bildes des zu prüfenden Fahrzeugs ausgebildet ist.

In einer Ausführungsform umfasst eine erfindungsgemäße Vorrichtung eine Auswertvorrichtung, die ausgebildet ist, die Quelle(n) des aufgenommenen Schalls in wenigstens einem Bild des zu prüfenden Fahrzeugs darzustellen.

Die Erfindung wird im Folgenden anhand der beigefügten Figuren erläutert und dabei zeigt:
Figur 1 eine schematische Seitenansicht einer erfindungsgemäßen Vorrichtung mit einem zu prüfenden Kraftfahrzeug;
Figur 2 eine schematische Draufsicht auf eine erfindungsgemäße Vorrichtung;
Figur 3 eine schematische Darstellung eines Bildes des Unterbodens eines Kraftfahrzeugs, das mit einer erfindungsgemäßen Vorrichtung aufgenommen worden ist; und
Figur 4 eine schematische Darstellung eines Bildes des Unterbodens eines Kraftfahrzeugs, das mit einer erfindungsgemäßen Vorrichtung aufgenommen worden ist, in dem die Position einer identifizierten Schallquelle optisch dargestellt ist.

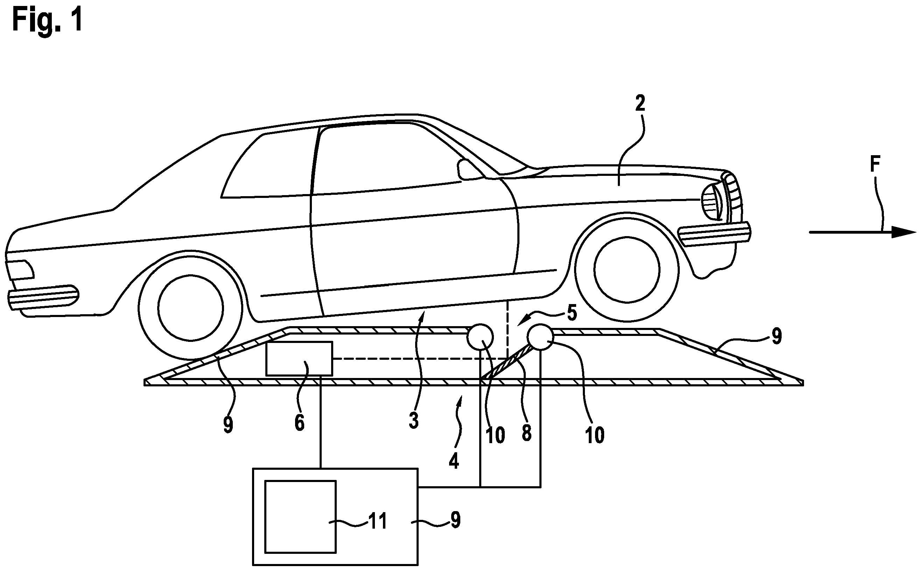

Figur 1 zeigt eine schematische Seitenansicht einer erfindungsgemäßen Vorrichtung 4 mit einem zu prüfenden Kraftfahrzeug 2.

Eine erfindungsgemäße Vorrichtung 4 ist im Querschnitt trapezförmig ausgebildet und weist schräge Endbereiche 9 auf, die als Rampen dienen und es ermöglichen, ein zu prüfendes Kraftfahrzeug 2 über die Vorrichtung 4 zu fahren.

Im Inneren der Vorrichtung 4 sind eine optische Kamera 6 und ein Spiegel 8 derart angeordnet, dass ein Bild wenigstens eines Teilbereiches des Unterbodens 3 des Kraftfahrzeugs 2 von dem Spiegel 8 in die Kamera 6 projiziert wird. Dazu ist in der Oberseite der Vorrichtung 4 wenigstens eine Öffnung 5 oder ein transparent ausgebildeter Bereich vorgesehen, der mit Hilfe des Spiegels 8 eine optische Sichtverbindung zwischen der Kamera 6 und dem Unterboden 3 des Fahrzeugs 2 ermöglicht. Zusätzlich können in der Figur 1 nicht gezeigte Beleuchtungsvorrichtungen vorgesehen sein, um den Unterboden 3 des Kraftfahrzeugs 2 ausreichend zu beleuchten.

Neben der Öffnung 5 bzw. dem transparenten Bereich in der Oberseite der Vorrichtung 4 sind Schallaufnahmevorrichtungen 10 vorgesehen, die ausgebildet sind, den von dem Fahrzeug 2 während der Überfahrt über die Vorrichtung 4 abgegebenen Schall aufzunehmen.

Die Schallaufnahmevorrichtungen 10 können insbesondere als Richtmikrofone 10 ausgebildet sein, die den Schall jeweils nur aus einem räumlich eng begrenzten Bereich aufnehmen und so eine gute Lokalisierung der Schallquellen am Kraftfahrzeug 2 ermöglichen.

Die Schallaufnahmevorrichtungen 10 und die Kamera 6 sind mit einer Auswertvorrichtung 9 verbunden, welche die von der Kamera 6 und den Schallaufnahmevorrichtungen 10 zur Verfügung gestellten Signale auswertet, um den aufgenommenen Schall bzw. die erkannten Schallquellen auf einer Anzeigevorrichtung 11 darzustellen und/oder mögliche Fehler am Kraftfahrzeug 2 auf der Grundlage des aufgenommenen Schalls zu erkennen.

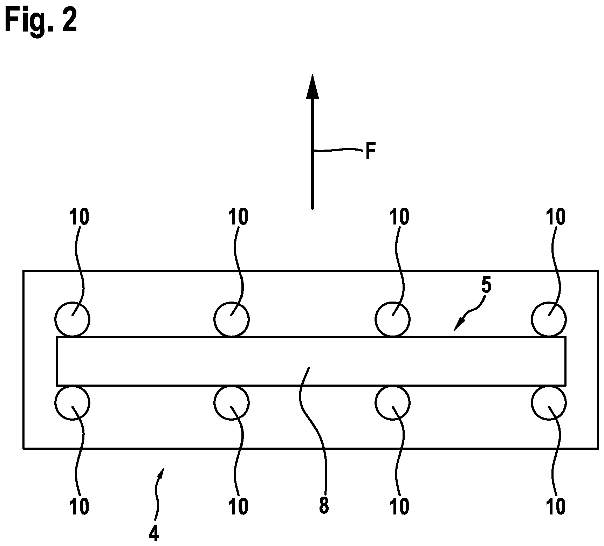

Die Figur 2 zeigt eine schematische Draufsicht auf den Bereich einer erfindungsgemäßen Vorrichtung 4 in der Umgebung der Öffnung 5 bzw. des transparenten Bereichs, die/der in der Oberseite der Vorrichtung 4 ausgebildet ist. Die Fahrtrichtung des Fahrzeugs bei der Überfahrt über die erfindungsgemäße Vorrichtung 4 ist als mit F bezeichneter Pfeil dargestellt.

Durch die Öffnung 5 ist der Spiegel 8 erkennbar, der jeweils einen quer zur Fahrtrichtung F verlaufenden, streifenförmigen Abschnitt des Unterbodens 3 des Fahrzeugs 2 in die Kamera 6 projiziert. Als Kamera 6 kann beispielsweise eine Schwarz-Weiß-Kamera 6, eine Farbbild-Kamera 6 oder eine Wärmebildkamera 6 eingesetzt werden.

Streifenförmige Bilder des Unterbodens 3 des Fahrzeugs 2 werden von der Kamera 6 mit einer Frequenz aufgenommen, die abhängig von der Geschwindigkeit des Fahrzeugs 2 bei der Überfahrt über die erfindungsgemäße Vorrichtung 4 ist.

Die von der Kamera 6 aufgenommenen streifenförmigen Bilder des Unterbodens 3 des Fahrzeugs 2 werden von der Auswertvorrichtung 9 zu einem Gesamtbild des Unterbodens 3 des Fahrzeugs 6 zusammengesetzt.

Um die Öffnung 5 sind mehrere Schallsensoren 10 angeordnet, die zur Aufnahme des von dem Fahrzeug 2 bei der Überfahrt über die Vorrichtung 4 abgegebenen Schalls ausgebildet sind.

Die von den Schallsensoren 10 aus dem aufgenommenen Schall generierten Schallsignale werden zur weiteren Verarbeitung an die Auswertvorrichtung 9 weitergegeben. Die Auswertvorrichtung 9 kombiniert die Schallsignale mit dem aus den von der Kamera 6 aufgenommenen Bildern zusammengesetzten Bild des Unterbodens 3 des Kraftfahrzeugs 2 und/oder identifiziert verdächtige Geräusche im aufgenommenen Schall, die auf einen Fehler am Fahrzeug 2 hindeuten. Eine Kombination des optischen Bildes mit einer optischen Darstellung des aufgenommenen Schalls bzw. verdächtiger Geräusche wird auf der Anzeigevorrichtung 11 angezeigt.

Um eine korrekte Kombination des von den Schallsensoren 10 aufgenommenen Schalls mit den von der Kamera 6 aufgenommenen Bildern 12a, 12b, 12c zu ermöglichen, müssen die Schallsensoren 10 in Bezug auf die Kamera 6 kalibriert werden.

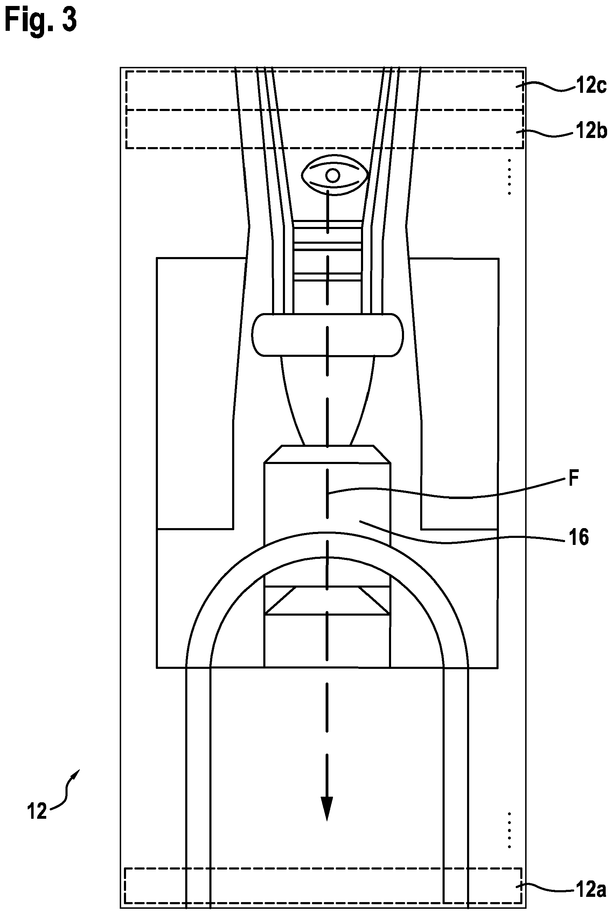

Figur 3 zeigt eine schematische Darstellung eines Gesamtbildes 12 des Unterbodens 3 des Fahrzeugs 2, wobei das Gesamtbild 12, wie zuvor beschrieben, aus eine Anzahl streifenförmiger Bilder 12a, 12b, 12c, die nicht alle in der Figur 3 gezeigt sind, zusammengesetzt ist.

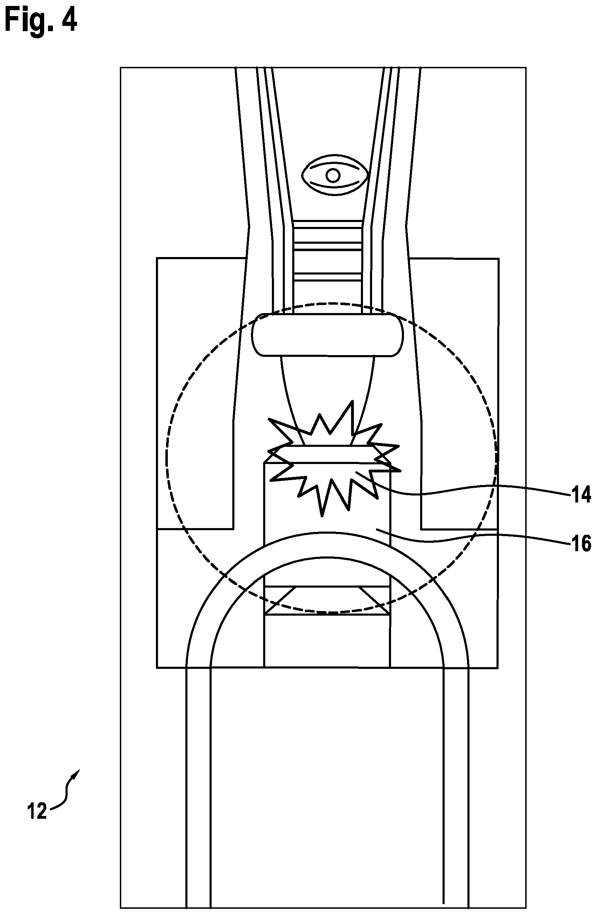

Figur 4 zeigt das bereits in der Figur 3 gezeigte Gesamtbild 12 des Unterbodens 3 des Fahrzeugs 2 in einer schematischen Darstellung, wobei zusätzlich der Ort 14 einer Quelle eines von der Auswertvorrichtung 9 als verdächtig identifizierten Schalls bzw. Geräusches dargestellt ist.

Ein das Kraftfahrzeug 2 untersuchender Mechaniker kann durch Betrachten des in der Figur 4 gezeigten kombinierten Gesamtbildes 12, das auf der mit der Auswertvorrichtung 9 verbundenen Anzeigevorrichtung 11 dargestellt wird, sofort erkennen, an welcher Stelle ein verdächtiges Geräusch auftritt, um mit der Fehlersuche fortzufahren. In dem in der Figur 4 gezeigten Beispiel tritt das verdächtige Geräusch an der Auspuffanlage 16 des Kraftfahrzeugs 2 auf, so dass der Mechaniker die weitere Fehlersuche vorzugsweise mit einer genaueren Untersuchung der Auspuffanlage 16 fortsetzen wird.

Durch die Anwendung eines erfindungsgemäßen Verfahrens und die Benutzung einer erfindungsgemäßen Vorrichtung wird die Fehlersuche vereinfacht und beschleunigt.

Durch die Kombination von Video- und Schallbildern in einer gemeinsamen Darstellung ist eine Steigerung der Robustheit bezüglich des Erkennens von Defekten an Kraftfahrzeugen 2 möglich, die auch für eine mögliche weitere Automatisierung des Inspektionsprozesses hilfreich ist.

Durch Differenzbildung zwischen der aufgenommenen Ist-Geräuschkulisse und einer vorgegebenen Soll-Geräuschkulisse können Abweichungen im Schallbild des Kraftfahrzeuges einfach und schnell erkannt werden. Alternativ kann die Auswertung auf dem Erkennen von Auffälligkeiten im Geräuschbild des Kraftfahrzeugs, z. B. durch ein sogenanntes statistisches Lernverfahren, durchgeführt werden.

Die in den Figuren 1 und 2 gezeigte Anordnung der Kamera 6 und der Schallsensoren 10 ist nur beispielhaft. Es sind selbstverständlich auch andere Anordnungen möglich, die eine gleichzeitige Aufnahme von Bildern des Unterbodens 3 eines Kraftfahrzeugs 2 und des von dem Kraftfahrzeug 2 abgegebenen Schalls ermöglichen.

Insbesondere kann die Vorrichtung 4 statt des in der Figur 1 gezeigten trapezförmigen Aufbaus vollständig, z. B. in einer Grube, unterhalb der Werkstattebene angeordnet sein.

Die Geschwindigkeit, mit der das Fahrzeug 2 während der Messung über die erfindungsgemäße Vorrichtung 4 gefahren wird, kann vorgegeben sein und durch eine Geschwindigkeitsmessvorrichtung überwacht werden, um für den Fall eines idealen, nicht defekten Fahrzeugs 2 ein definiertes optisches und akustisches Bild vorzugeben.

Die Auswertung und Darstellung des von den Schallsensoren 10 aufgenommenen Schalls kann in Abhängigkeit von der jeweiligen Lautstärke und/oder der jeweiligen Frequenz vorgenommen werden. Zum Beispiel kann das aufgenommene Schallbild auf ungewöhnliche Frequenzen, die auf Defekte am Fahrzeug 2 hinweisen, untersucht werden.

Die Schallquellen können im angezeigten kombinierten Bild 12 nach ihrer Lautstärke und/oder ihrem Frequenzbild farblich differenziert dargestellt werden, um die Analyse zu erleichtern.

Insbesondere bei Überlagerungen verschiedener Geräusche ist eine erfindungsgemäße Auswertung zuverlässiger als die bisher durch den Mechaniker vorgenommene Auswertung "nach Gehör".

## Patentansprüche

1. Verfahren zum Prüfen eines Fahrzeugs (2), insbesondere eines Kraftfahrzeugs, wobei das Verfahren einschließt, eine Messvorrichtung (4) mit dem Fahrzeug (2) zu überfahren; und das Verfahren **dadurch gekennzeichnet ist, dass** es die Schritte einschließt:
Aufnehmen von Schall, der beim Betrieb des Fahrzeugs (2), während der Überfahrt über die Messvorrichtung (4) abgegeben wird, mit wenigstens einer Schallaufnahmevorrichtung (10);
Auswerten des von der wenigstens einen Schallaufnahmevorrichtung (10) aufgenommenen Schalls, wobei das Verfahren einschließt, streifenförmige Bilder des Unterbodens aufzunehmen und zu einem optischen Bild des Unterbodens (3) des Fahrzeugs (2) zusammenzusetzen und die wenigstens eine an dem Fahrzeug (2) lokalisierte Schallquelle (14) als optische Darstellung im aufgenommenen optischen Bild des Unterbodens (3) anzuzeigen.

2. Verfahren nach Anspruch 1, wobei das Verfahren einschließt, wenigstens eine Schallquelle (14) an dem Fahrzeug (2) zu lokalisieren.

3. Verfahren nach einem der vorangehenden Ansprüche, wobei das Auswerten einschließt, den aufgenommenen Schall mit einem vorgegebenen Soll-Schall zu vergleichen.

4. Verfahren nach einem der vorangehenden Ansprüche, wobei das Auswerten einschließt, Auffälligkeiten in dem aufgenommenen Schall zu identifizieren.

5. Vorrichtung (4) zum Prüfen eines Fahrzeugs (2) **gekennzeichnet durch** wenigstens einer Schallaufnahmevorrichtung (10), die zur Aufnahme von Schall ausgebildet ist, der während des Betriebs des zu prüfenden Fahrzeugs (2), insbesondere vom Motor, der Auspuffanlage (16) und/oder den Gelenken des Fahrzeugs (2), abgegeben wird; und einer Auswertvorrichtung (9), die zur Auswertung des von der wenigstens einen Schallaufnahmevorrichtung (10) aufgenommenen Schalls ausgebildet ist, wobei die wenigstens eine Schallaufnahmevorrichtung (10) so ausgebildet ist, dass sie eine Lokalisierung wenigstens einer Quelle (14) des aufgenommenen Schalls ermöglicht, wobei die Vorrichtung (4) wenigstens eine Bildaufnahmevorrichtung (6) aufweist, die zur Aufnahme von streifenförmige Bildern des Unterbodens (3) ausgebildet ist, wobei die streifenförmige Bilder des Unterbodens (3) zu einem optischen Bild des Unterbodens (3) des Fahrzeugs (2) zusammensetzbar sind, und mit wenigstens einer Anzeigevorrichtung (11), die ausgebildet ist, wenigstens eine Quelle (14) des aufgenommenen Schalls in dem wenigstens einem optischen Bild des Unterbodens (3) des zu prüfenden Fahrzeugs (2) anzuzeigen.

6. Vorrichtung (4) zum Prüfen eines Fahrzeugs (2) nach Anspruch 5, wobei die Vorrichtung (4) wenigstens zwei Schallaufnahmevorrichtungen (10) aufweist.

## Claims

1. A method for testing a vehicle (2), in particular a motor vehicle, the method comprising driving the vehicle (2) across a measuring device (4); and the method being **characterized by** comprising the steps of:
recording sound emitted during operation of the vehicle (2) when the latter drives across the measuring device (4) by means of at least one sound recording device (10);
evaluating the sound recorded by the at least one sound recording device (10), said method including recording strip-shaped images of the underbody and combining the same into an optical image of the underbody (3) of the vehicle (2) and displaying the at least one sound source (14) localized on the vehicle (2) in the form of an optical representation in the optical image recorded of the underbody (3).

2. The method of claim 1,
wherein said method includes localizing at least one sound source (14) on the vehicle (2).

3. The method of any of the preceding claims,
wherein said evaluating includes comparing the sound recorded with a predetermined target sound.

4. The method of any of the preceding claims,
wherein said evaluating includes identifying abnormalities in the sound recorded.

5. A device (4) for testing a vehicle (2),
**characterized by** at least one sound recording device (10) adapted to record sound emitted during operation of the vehicle (2) to be tested, in particular by the engine or motor, the exhaust system (16) and/or joints of the vehicle (2); and an evaluation device (9) which is designed to evaluate the sound recorded by the at least one sound recording device (10), with the at least one sound recording device (10) being designed such that it permits localizing of at least one source (14) of the sound recorded, said device (4) having at least one image recording device (6) which is designed to record strip-shaped images of the underbody (3), wherein said strip-shaped images of the underbody (3) of the vehicle (2) can be combined into an optical image of the underbody (3) of the vehicle (2), and comprising at least one display device (11) designed to display at least one source (14) of the recorded sound in the at least one optical image of the underbody (3) of the vehicle (2) to be tested.

6. The device (4) for testing a vehicle (2) according to claim 5,
wherein the device (4) comprises at least two sound recording devices (10).

## Revendications

1. Procédé destiné au contrôle d'un véhicule (2), en particulier d'un véhicule automobile, impliquant de rouler sur un dispositif de mesure (4) avec le véhicule (2) en question ; procédé **caractérisé en ce qu'**il comprend les étapes suivantes:
Enregistrement de sons produits par le véhicule (2) en marche lorsqu'il roule sur le dispositif de mesure (4), avec au moins un dispositif d'enregistrement sonore (10) ;
Évaluation du ou des son(s) enregistré(s) par au moins ce dispositif d'enregistrement sonore (10), sachant que le procédé implique d'enregistrer des images en forme de bandes du dessous de caisse et de les agencer afin de composer une image optique du dessous de caisse (3) du véhicule (2) et de montrer ainsi au moins une source de son (14) localisée sur le véhicule (2), sous la forme d'une représentation optique au sein de l'image optique enregistrée du dessous de caisse (3).

2. Procédé selon la revendication 1, **caractérisé en ce qu'**il comprend la localisation d'au moins une source de son (14) sur le véhicule (2).

3. Procédé selon l'une des revendications précédentes, **caractérisé en ce que** l'évaluation comprend la comparaison du son enregistré par rapport à un son de référence prédéfini.

4. Procédé selon l'une des revendications précédentes, **caractérisé en ce que** l'évaluation comprend l'identification d'anomalies dans le son enregistré.

5. Dispositif (4) pour le contrôle d'un véhicule (2), **caractérisé en ce qu'**il comprend au moins un dispositif d'enregistrement sonore (10) conçu pour enregistrer les sons produits sur le véhicule (2) à contrôler en état de marche, en particulier par le moteur, le système d'échappement (16) et/ou les articulations du véhicule (2) ; caractérisé également **en ce qu'**il comprend un dispositif d'évaluation (9) conçu pour évaluer le son enregistré par au moins ce dispositif d'enregistrement sonore (10), sachant que ledit dispositif d'enregistrement sonore (10) est constitué de telle sorte qu'il permet de localiser au moins une source (14) du son enregistré, que le dispositif (4) présente au moins un dispositif de prise d'images (6) conçu pour prendre des images en forme de bandes du dessous de caisse (3) et que les images en forme de bandes du dessous de caisse (3) peuvent être agencées afin de former une image optique du dessous de caisse (3) du véhicule (2) ; caractérisé également par la présence d'un dispositif d'affichage (11) constitué de telle manière qu'il permet d'afficher au moins une source (14) du son enregistré au sein d'au moins une image optique du dessous de caisse (3) du véhicule (2) à contrôler.

6. Dispositif (4) pour le contrôle d'un véhicule (2) selon la revendication 5, **caractérisé en ce que** le dispositif (4) présente au moins deux dispositifs d'enregistrement sonore (10).
